Europäisches Patentamt

European Patent Office

Office européen des brevets

(19)

(11) Publication number: **0 213 276**
**A2**

(12)

# EUROPEAN PATENT APPLICATION

(21) Application number: 86106715.5

(51) Int. Cl.⁴: **G06F 15/40**

(22) Date of filing: 16.05.86

The title of the invention has been amended (Guidelines for Examination in the EPO, A-III, 7.3).

(30) Priority: 11.06.85 US 743560

(43) Date of publication of application:
**11.03.87 Bulletin 87/11**

(84) Designated Contracting States:
**DE FR GB IT**

(71) Applicant: **International Business Machines Corporation**
**Old Orchard Road**
**Armonk, N.Y. 10504(US)**

(72) Inventor: **Bartocci, Francis Dennis**
**2434 Northern Hill Ct.**
**Rochester Minnesota 55904(US)**
Inventor: **Won, Joha Hyun**
**24, Sedgewood Road**
**Chapel Hill North Carolina 27514(US)**
Inventor: **Singh, Harinder S.**
**10722 Kirkaldy Lane**
**Boca Raton Florida 33434(US)**
Inventor: **Gopal, Inder**
**60, Hauen Ave. NR 19E**
**New York N.Y. 10032(US)**

(74) Representative: **Bonin, Jean-Jacques**
**Compagnie IBM France Département de Propriété Intellectuelle**
**F-06610 La Gaude(FR)**

(54) Dynamic updating of data base directories.

(57) A directory database system includes a network and a plurality of directory service units (DSU), each of the DSUs providing one or more directory service functions within the directory database. For propagation of an undirected update relative to an object stored in the database from a source DSU to one or more target DSUs, one of which target DSUs may contain information relative to the object, a propagation (P) table is provided in each of the DSUs, the P tables being a data structure capable of determining which other DSUs to send the update to.

The source DSU examines its associated P table for the directory type specified in the update to generate an identification of one or more additional target ones of the DSUs to which the update should be directed.

FIG. 17

# DYNAMIC UPDATE OF DATABASE DIRECTORIES USING DIRECTED OR UNDIRECTED MECHANISMS

## CROSS REFERENCE TO RELATED APPLICATIONS

The following copending applications, all filed by the same applicant as the present application, are related to the subject matter of this application, in that they each relate to different aspects of a directory database system.

(A1) "GENERALIZED DATA DIRECTORY MODEL", Application No

(A2) "PROPAGATION APPARATUS FOR NETWORK QUERIES THROUGH SUPERIOR-SUBORDINATE AND PEER-PEER DATA DISTRIBUTION RELATIONSHIPS", Application No

(A3) "GENERALIZED ALGORITHMIC CONTROL BLOCKS FOR SEQUENTIAL AND PARALLEL QUERIES IN DISTRIBUTED DIRECTORY NETWORKS", Application No

(A4) "HYBRID DIRECTORY DATA DISTRIBUTION SCHEMES FOR NETWORK TOPOLOGIES", Application No

All of the above applications (filed concurrently with the present Application) are incorporated herein by reference.

## BACKGROUND OF THE INVENTION

### Field of the Invention

This invention relates in general to the modification and updating under user or automatic control of database directories on a dynamic basis. In the present Application the term "directory" means a table of names and corresponding items of data. Data in a directory is locational or directive in nature, e.g.

(1) a listing of names, addresses, and other data about a specific group of persons or organizations, or

(2) an index that is used by a control program to locate one or more blocks of data stored in separate areas of a data set in direct access storage, or

(3) an index to locate blocks of program information.

The user of a directory knows the definition of the object references by a name, but needs the specific data value(s), e.g. phone number, in order to perform a specific activity.

### Description of the Prior Art

Distributed database management systems offer users the ability to distribute data and workload among multiple processing sites. Ideally, a distributed database management system should support growth while preserving local administrative autonomy and control of access to locally stored data. At the same time, the distributed database should provide its users with a single system image such that, although the data is distributed among several sites, the data distribution is transparent to the users who express their database accesses as though the data is at one place.

It is important to preserve the local autonomy of database administrators and users at each site of the distributed database while, at the same time, supporting information sharing among sites. It is to be expected that the equipment supporting the database at different sites will be controlled by different administrative entities. This expectation increases as the entry costs for computing facilities leads to additional requirements for information sharing between sites to support the shared objectives and interests of the users at different sites. Therefore, credible access control mechanisms must be provided to insure isolation, when desired, and to control access to the shared information. At the same time, users must be able to easily access and manipulate remote data as though it were local.

The distributed database management system architecture should preserve local control and function when accessing local database objects. The fact that a site participates in the distributed database should not reduce that site's ability to perform local actions on local data by requiring the participation of other sites. Also, data access availability should be a function only of the availability of the site(s) storing that data objects. The failure of one site should not impact sites which do not reference database objects stored (or controlled) by the failed site.

Finally, it must not be difficult for an existing database site to join the distributed database. It should be fairly easy for an existing database to establish the ability to access data at another site. The addition of another site to the distributed database must not require a nationwide (or global) system generation.

U.S. Patent 4,468,728 discloses data structure and a search method for a database management system in which the data structure is arranged in a plurality of search trees. The initial search tree and an initial subset of trees are maintained in a main fast access memory, while the remaining trees are kept in mass memory. An input search parameter is partitioned into a plurality of subparameters, one for each search tree. The subparameters are used to search a tree in each level of the data structure until the location of a terminating file is determined.

An article entitled 'Object Naming and Catalog Management For a Distributed Database Manager", Lindsay, 1981 IEEE, page 31, describes a system in which distribution of the catalog representation and maintenance leads to an architecture which supports transparent user access to data which may be distributed, replicated, and partitioned among the site of the distributed system. The architecture preserves individual site autonomy while facilitating graceful system growth.

SUMMARY OF THE INVENTION

In the following description and drawings, the terms below are used with the indicated meanings.

Application Interface (API) -The protocol boundary between the user and the directory service.

Directory Service Interface (DSI) -The internal interface between directory service units and outside services, such as communication, user services, or user data areas.

Directory Service System (DSS) -An instance of directory service in a given network of distributed directory services.

Directory Services Unit (DSU) -A unit of DSS that provides one or more directory service functions.

The requirements placed upon the directory update mechanisms provide the rationale for the mechanisms themselves. The requirements are as follows:

Full Accessibility : This is the basic requirement. It states that if a piece of information is stored in the directory services system, a user at any DSU in the system should be able to gain access to that information. This should be possible even if the user does not know precisely where that information is stored, or the way in which data is distributed through the DSS. The requirement is subject to several exceptions, such as security or access control restrictions. However, in general, the design of the update mechanisms will be primarily motivated by this requirement.

Subset-Ability : This requirement states that the various DSUs participating in a DSS need not all implement the full function of the update mechanisms in order for the first requirement to be satisfied. For example, small work-stations in a DSS may not wish to act as intermediate nodes, but the users of the DSS may still require full accessibility. Implied in this requirement is the necessity for compatibility between different subsets operating within the same DSS.

Performance : Performance can be measured in many different ways. The major performance criteria are :

a. Bandwidth : It is clearly desirable to minimize the number of messages sent through the network by the update mechanisms, thereby freeing network bandwidth for other purposes.

b. Storage : Minimizing storage is particularly important in environments which consist of small minicomputers and/or work-stations.

c. Delay : This refers in particular to query response times in order to make dynamic updates.

The algorithms used in the present invention are designed, as far as possible to minimize the above criteria.

BRIEF DESCRIPTION OF THE DRAWINGS

Fig. 1 is a block diagram illustrating processes using a directory service system;

Fig. 2 is a block diagram illustrating interconnected DSUs in a DSS;

Fig. 3 illustrates the processing functions distributed in a DSS;

Fig. 4 illustrates a two-level hybrid directory system;

Fig. 5 shows the structure of the end user service P(U);

Fig. 6 is a block diagram illustrating the structure of the directory function service P(F);

Fig. 7 is a block diagram showing the structure of the directory data service P(D);

Fig. 8 illustrates the structure of the network service process P(N);

Fig. 9 shows the distribution of directory service processes in a DSS;

Fig. 10 illustrates DSI request flows among DSPs;

Fig. 11 illustrates the reply flows among DSPs;

Fig. 12 is a block diagram of the overall structure of the system of the present invention;

Figs. 13 and 14 illustrate the processing sequences for update and query propagation, respectively, in accordance with the present invention;

Fig. 15 shows the flow of a directed update in accordance with the present invention;

Fig. 16 illustrates the flow where a special directory is interrogated to obtain a target DSU identification for a directed update;

Fig. 17 shows the propagation of an undirected update;

Fig. 18 illustrates an example of undesired looping between two DSUs during an update;

Fig. 19 shows a representative query P-table (QP) and an update P-table (UP);

Fig. 20 is a pictorial representation of a Superior-Subordinate (SUP-SUB) relationship between DSU's;

Fig. 21 illustrates the flow for P-table translation for the SUP-SUB relationship shown in Fig. 20;

Fig. 22 is a representation of DSUs having a Peer-Peer relationship to each other;

Fig. 23 shows the P-table translation for the DSUs of Fig. 22;

Fig. 24 is a representation of DSUs directories having a replicated relationship to each other;

Fig. 25 shows the P-table translation for the DSUs of Fig. 24;

Figs. 26-29 illustrate a number of other relationships among other DSUs;

Fig. 30 shows a UP_table illustrating parallel propagation to a number of SUP DSUs;

Fig. 31 shows a QP-table for the parallel propagation to SUP and PEER DSUs;

Fig. 32 shows a QP table for sequential propagation between SUP and PEER DSUs; and

Fig. 33-37 illustrate a typical update message propagated in accordance with the present invention.

## DESCRIPTION OF THE PREFERRED EMBODIMENT

Prior to a detailed description of the present invention, the following overview of the environment and elements of the invention are given.

The basic structure of the directory database system of the present invention is shown in Fig. 12. Fig. 12 illustrates the different interfaces or protocol boundaries between the DSU shown in the dotted enclosure and other portions of the system. Theses boundaries include a user protocol boundary shown at the top of the figure, a data access protocol boundary at the right side of the figure representing the interface between the DSU and the database, and a communications protocol boundary illustrated at the bottom of the figure.

The present structure and method is based on a distribution scheme where an instance of directory service may include one or more DSUs. Each DSU may perform one or more directory functions depending upon the product implementation.

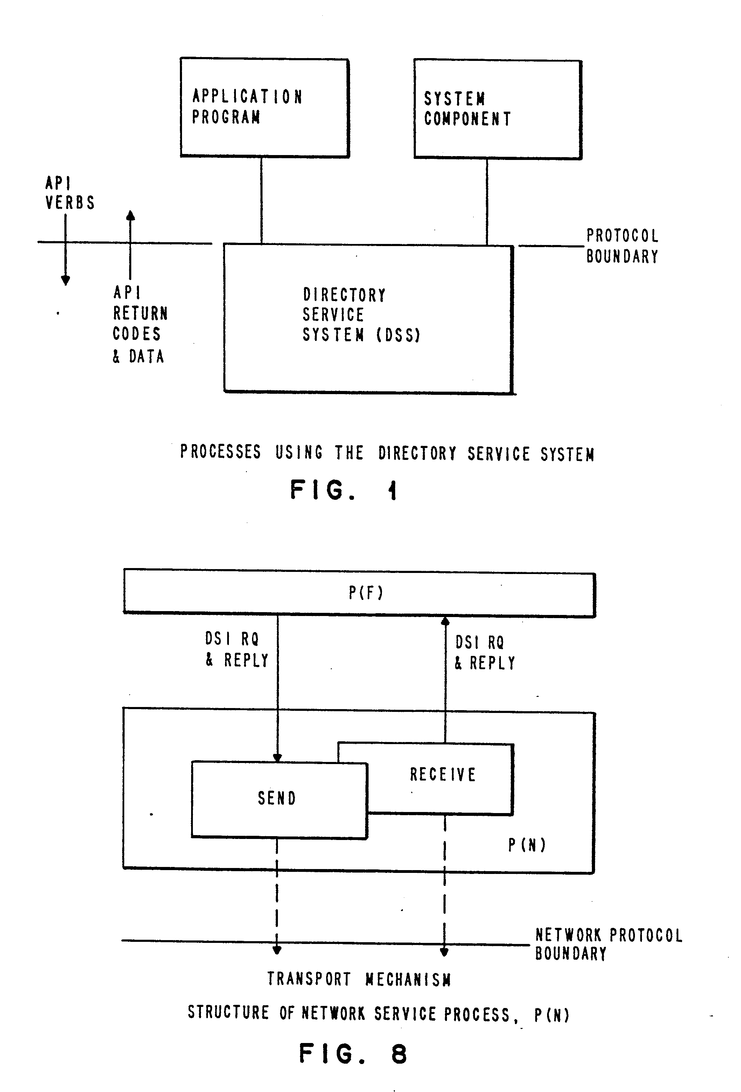

The directory service system (DSS) shown in Figure 1 is an installation of directory functions in a network of interconnected system. DSS provides the architectural directory services for the user at the API protocol boundary. The participating systems (products) in a DSS operate coherently under the architected rules such as data distribution - schemes, naming schemes, search/update algorithms, error recovery, synchronization and the like.

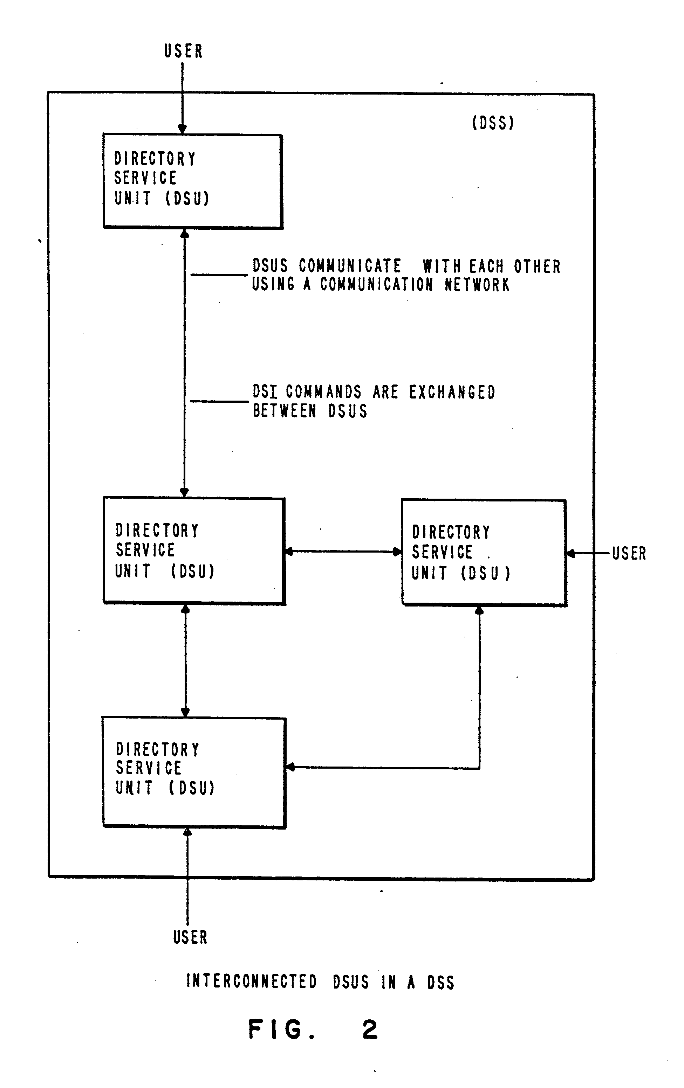

A DSS is comprised of a collection of directory service units distributed throughout the interconnected system network as shown in Figure 2. A DSU represents the directory service component of a system product implementing directory service functions. Although multiple DSUs may exist in the same system (product) for different directory applications, it is the intent that a single DSU can support many applications programs to eliminate duplication.

DSU Functions

A DSU is composed of a set of functional components called directory service processes - (DSP) to provide the subsetting basis for implementation by products. There are the following four types of DSPs, each of which performs distinct functions.

1. User Service Process, denoted as P(U) or U, manages the interface (protocol boundary) with users.

2. Directory Function Process, denoted as P-(F) or F, processes the directory functions to service the directory request using the algorithms - (query/update/naming).

3. Directory Data Service, denoted as P(D) or N, manages the transport network facilities to communicate with other DSUs.

In order to obtain full directory service, it is not necessary that every DSU in the system implement all DSPs. For example, a work-station may implement only some of the functions and obtain full directory service through interaction with a larger system product. Thus, a DSU may contain all four DSPs or some of the DSPs as necessary to meet the functional needs of each product.

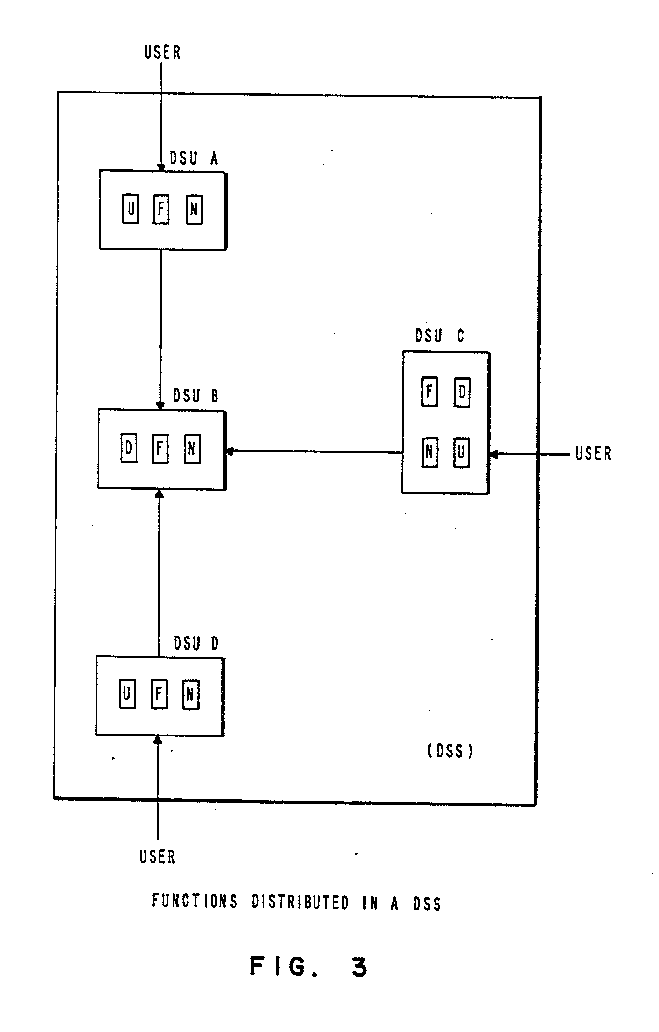

Figure 3 shows an example of implementation options by products in a simple network. DSU A and DSU D represent the work-station which performs the query on an as needed basis and discards the results of the query without retaining it in the storage. This type of product may not have to implement P(D). DSU C represents another type of work-station which retains the results of a query in its local directory. This type of product needs to implement P(D). DSU B represents the file server which acts merely as a data repository to maintain the master directory for the network. This type of product may not have to implement P(U).

## DSU Roles

In order to perform a directory service in a distributed network environment, several DSUs are generally involved and each DSU plays different roles. The origin or source DSU receives a directory request from the user and originates the DSI request. The request is propagated through the intermediate DSUs as necessary to reach the target DSU which can service the request.

## Directory Data Base

A directory is a database that stores mappings from name to information related to name. The directory data base is the set of directories which contain information of a similar type. There is more than one member in the set if the directory data base is distributed across participating DSUs. The directory data base and all members which comprise it are named via a directory type ID (Directory Identifier). For example, a directory database with directory type_ID TELEPHONE may contain name to telephone number mappings. A single DSU may maintain directories of different directory type_DI's, but for any given type_ID, a DSU may contain at most one directory.

## Directory Distribution

Some examples of directory distribution - schemes are as follows :

## Centralized Directory System

In this centralized directory system, there is a single master directory per directory type-IC located at one of the DSUs. The master directory will be updated whenever a change takes place. Directory updating in such a system is relatively easy. However, there are communication costs (traffic) incurred for each query, since all queries compete for the same resources.

## Extended Central

In this centralized directory system, once a DSU finds directory data, he can append this data onto his local directory. Thus, subsequent queries for the same data can be satisfied directly from his local directory, thereby reducing the communication cost as well as time for querying the master directory.

## Multiple Masters

In this directory system, there is more than one master directory per directory type_ID in the system. The degenerated case will be the replicated directory system.

## Local Directory System

### Local

In the local directory system, there is no master directory in the system and each DSU maintain its local directory data. When a DSU cannot satisfy the directory request from its local directory, it queries all other directories in the system until the requested data has been located.

### Extended Local

In this local directory system, once a DSU finds the directory data, it can append this data onto its local directory. Thus, subsequent queries for the same data can be satisfied directly from its local directory, thereby reducing communication costs.

## Replicated Directory System

In the replicated directory system, each DSU in the system has a master directory. The advantage of this system is its fast query response time. The disadvantage of this system is the cost of storing master directory information at each DSU, as well as the communication cost for updating all these directories.

## Hybrid Directory System

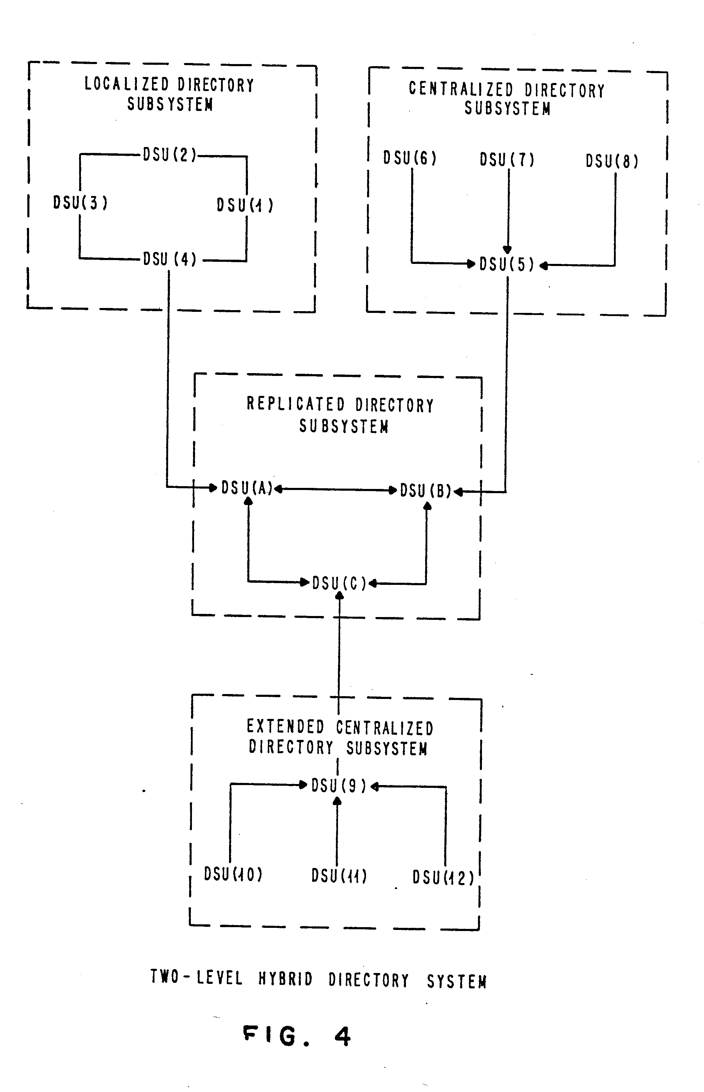

For networks up to a few tens of DSUs, a single level (primitive) distribution scheme described above (that is, centralized, localized and distributed), is usually sufficient. Beyond this number of nodes, hybrid systems combining various primitive distribution schemes in a hierarchical manner, as illustrated in Figure 4, may be attractive. The hybrid multiple level design can offer both types of performance improvements over a single level design.

The hybrid directory system is logically divided in subsystems, or regions, made up of any number of distributed directory services. Each subsystem uses different (primitive) directory distribution - schemes to fit into its regional environment. The hierarchical relationships between subsystems are independent of the actual topology of the physical network.

## DSU-DSU Relationship

A directory service can define the functional relationship among the DSUs distributed in the network due to the following aspects :

The relationship provides a method or organizing the DSUs distributed in the network to allow the definition of simple and efficient protocols for the propagation of DSI commands such as query/update. In particular, the relationship can be used to constrain the set of DSUs to which a particular DSU can send a DSI command for query/update. The relationship is used to control how to distribute the directories, per directory type, among DSUs and how to maintain the respective directory. In some of the directory applications, the relationship of a particular set of DSUs might reflect the organization structure of the enterprise owning the network, even though the network topology does not.

## DSU-DSU Communication

The lines joining the DSUs in Figure 2 indicate the communication paths. Communication between DSUs may be accomplished through the use of any one of several different transport mechanisms. For example, DSUs may communicate with each other by running as a set of transaction models using IBM's System Network Architecture (SNA) or equivalent level of transport facilities. In this case, the lines represent sessions and may not resemble in any way the physical topology of the network. The only assumption that the directory service structure makes about the nature of the transport mechanism is that it provides guaranteed error-free delivery of data from source to destination.

## User DSU interface

The user makes a directory function request by way of the API verbs to one of the DSUs. The requested DSU interacts with other remote DSUs, and then provides the appropriate response to the user.

## DIRECTORY SERVICE PROCESS (DSP)

This section describes the functions and structure of each DSP. In practice, the DSPs may be implemented either in programming or by a microprocessor.

## End User Service Process P(U)

The P(U) basically manages the protocol boundary to service the end user request. Only P-(U) interfaces with the API, thus shielding other DSPs from the end user. At the request of the end user, P(U) parses the received verbs and sends the directory request to P(F) for the information/response. When it receives the information/response from P(F), it returns it to the user to satisfy the original API verb.

## Structure of P(U)

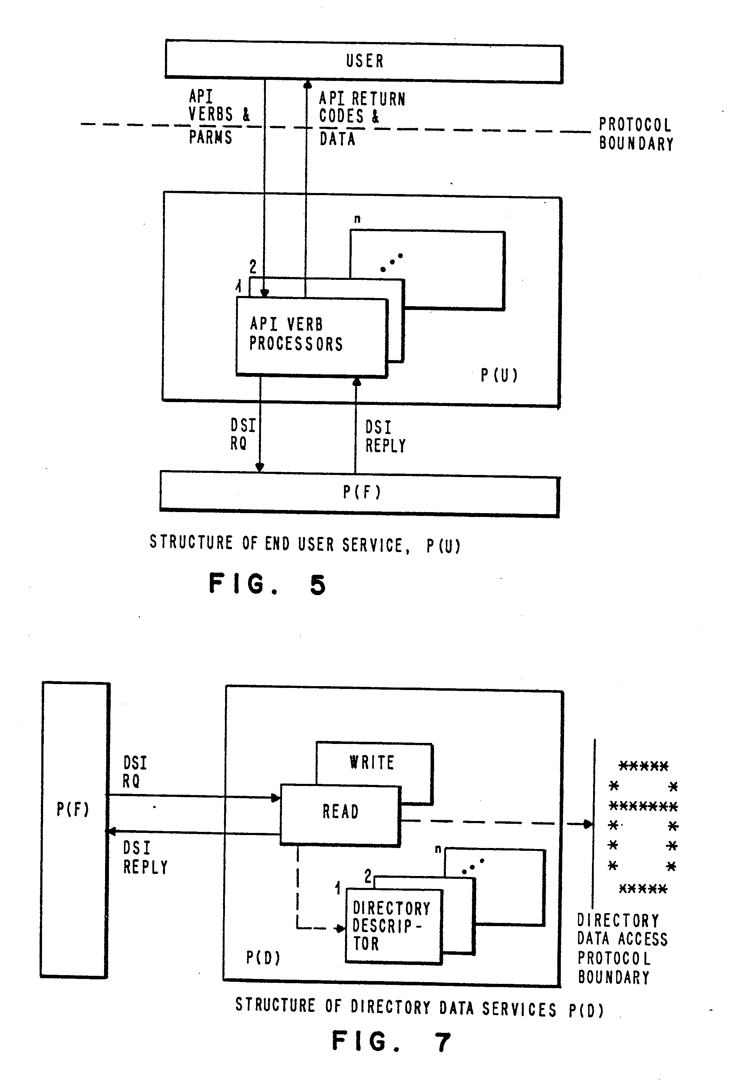

As shown in Fig. 5, P(U) consists of a set of API verb processors, each of which has two components (API send processor and API receive processor). The API send processor is to parse the API verbs and its associated parameters from the user and construct the DSI request encoding to be sent to P(F) for specific directory tasks as requested in the API verbs. The API receive processor is to decode the received DSI replies and present the information:data (carried in the reply) to the user protocol boundary according to the defined API rules.

## Directory Function Service : P(F)

The P(F) performs the essence of distributed directory functions such as search/update algorithms and naming algorithm. P(F) is knowledgeable of the existence of distributed directories and name database (if any), and it provides a focal point for maintaining currency among them in the system.

The P(F) is responsible for providing the information response satisfying the request from P-(U). P(F) maintains/manages the directory operation control block to be used by the directory algorithm facilities. The control block contains the algorithm control information such as affinity lists. P(F) uses this information to determine the best way to get information and respond to the requests from P(U). P(F) interacts with other remote P(F)s as necessary to locate the target P(F) (that is, the P(F) (that is, the P(F) that originally received a request from P-(U)). Then the source P(F) passes the directory data to the P(U) that originated the request. P(F) is the bridge form of service interacting with both P-(U) and P(D), as well as P(N).

Structure of P(F)

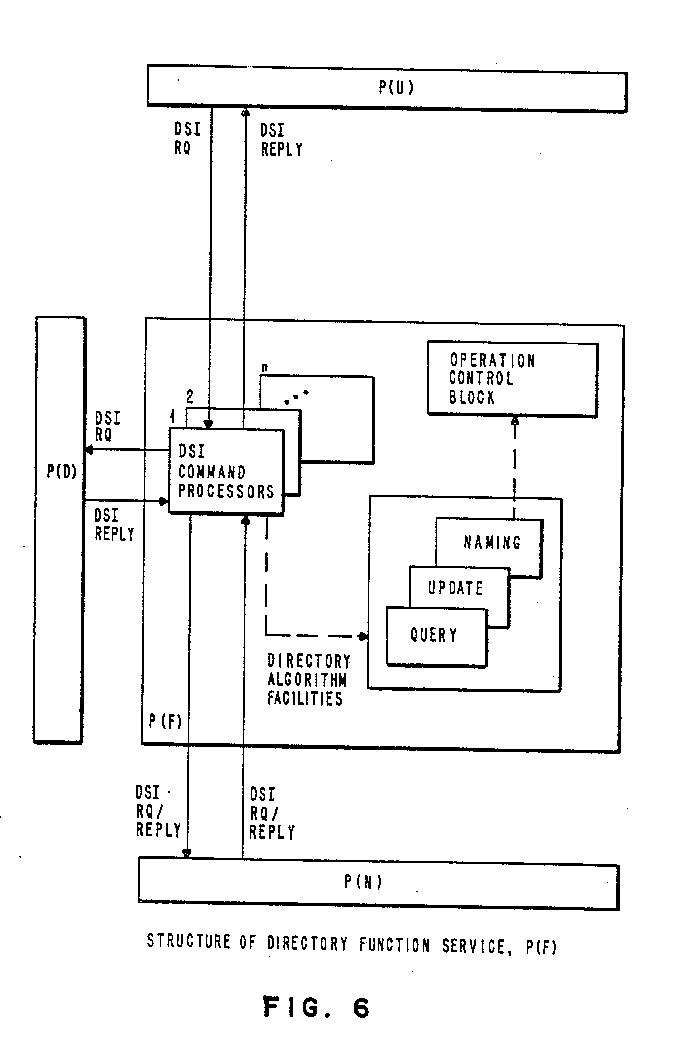

As shown in Fig.6, P(F) consists of a set of DSI command processors, each of which has two components (DSI request processor and DSI reply processor) to process the received requests and replies respectively. The format of the input to the P-(F) should preserve the DSI command construct regardless of whether the command is received from the P(U) or the remote P(F)s through the communication network.

The DSI request processor processes the DSI requests received from either P(U) or remote DSUs. It uses the directory algorithm facilities as the query/update propagation algorithm and the name assignment algorithm as appropriate. The directory algorithms determine the target DSU which can provide the requested information. If the receiving DSU is determined to be the target DSU, the DSI request processor fetches the requested information by way of P(D) and sends the DSI reply carrying that information to the origin DSU. Otherwise, the DSI request processor passes the received request to the other DSU as the algorithm determines, based on the affinity lists of the operation control block.

The DSI reply processor processes the DSI replies which carry the information requested by the DSI requests. If the receiving DSU is the origin DSU (which originated the DSI request), the DSI reply processor passes it to the local P(U). Otherwise, it sends the received DSI reply toward the origin DSU.

Directory Data Service : P(D)

The P(D) manages the directory data access protocol boundary to access and maintain the directory data. Only P(D) has knowledge of the structure of the directory contents by way of the directory descriptors specified by the users, thus shielding other DSP's from the directory data structures.

The P(D) receives the directory data request - (query, update and so on) from P(F), performs the appropriate operation on the directory data by way of the data access protocol boundary and responds as appropriate to the P(F). It is the responsibility of P(F) to locate the target P(D) (that is, the P(D) maintaining the requested directory data) before sending a request to that P(D).

Structure of P(D)

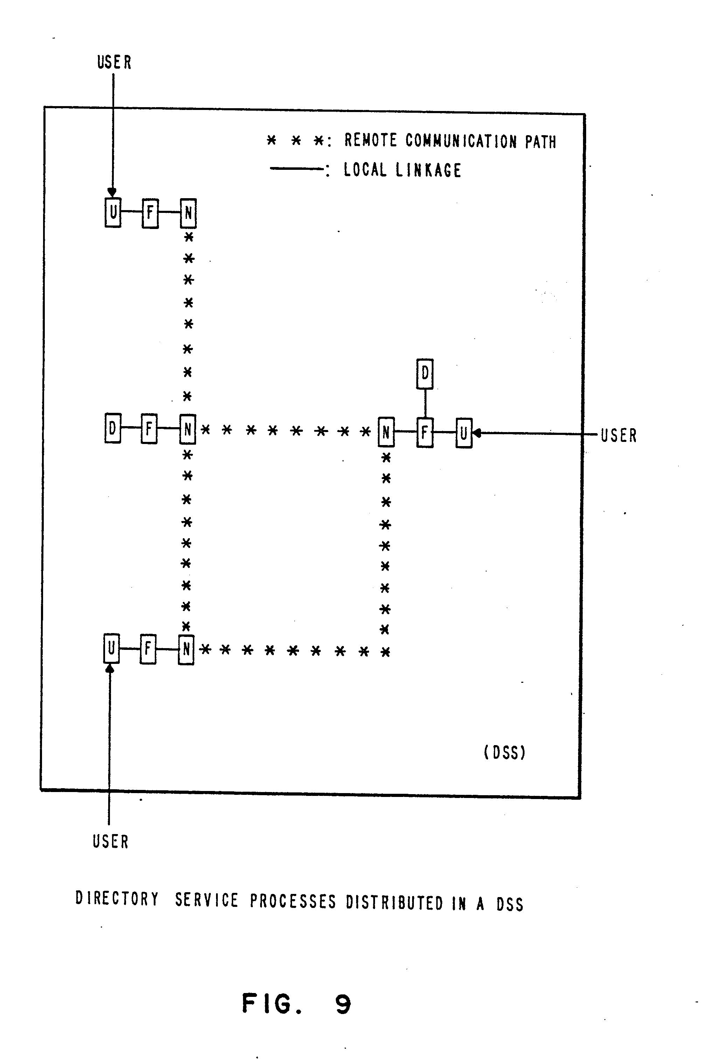

As shown in Fig. 7, the P(D) consists of two processors, Read and Write. The read processor services the DSI requests (for example, query), from P(F), which requires reading the directory data through the data access protocol boundary. It reads the requested directory data according to the directory descriptors and returns the retrieved data by way of the appropriate DSI reply to P(F). The write processor services the DSI requests (for example, update), from P(F), which requires writing the directory data through the data access protocol boundary. It performs the directory data update as requested, according to the directory descriptors, and returns the results, if necessary, via the appropriate DSI reply.

Directory Network Service : P(N)

The P(N) provides the ability to send and receive the DSI commands between DSUs. It interfaces with the transport mechanism used for DSU-DSU communication, thus shielding other DSP's from the networking function. P(N) controls the network protocol boundaries to achieve the P(F) to P(F) conversation between remote DSUs. The content of DSI request/replies are basically transparent to P(N), and the function of P(N) is merely to deliver the DSI requests/replies to the remote P(F)-'s through the network. Also, the P(N) does not determine where to send queries or updates. This is determined by the propagation algorithm in the P(F).

Structure of P(N)

As illustrated in Fig. 8, the P(N) consists of two processors, send and receive. The send processor is to control the sending of data in a DSU-DSU communication. The receive processor is to receive data from the DSU-DSU communication. The functions of these processors have direct dependencies on the protocol boundary of the network used for DSU-DSU communication. The directory structure describes the specific functions of P(N) required to use the DSU-DSU transport mechanisms.

Relationships Between DSPs

A DSS can be viewed as a collection of an arbitrary number of P(U)s, P(F)s, P(D)s and P(N)s, (Figure 9). A DSU must contain at least a P(F) and a P(N), although the levels of complexity of the functions to be performed vary depending on the roles of the DSU within a DSS. DSI commands are used as the message units to carry information from one DSP to another. There are two types of DSI commands, DSI request and DSI reply. The DSI request is used to carry the specific request information to the target DSP, and the DSI reply to carry the information/response to the origin DSP.

Based on the definitions of DSPs discussed above, the following relationships can be constructed to depict the message flows among DSPs -P-(U), P(F), P(D) and P(N).

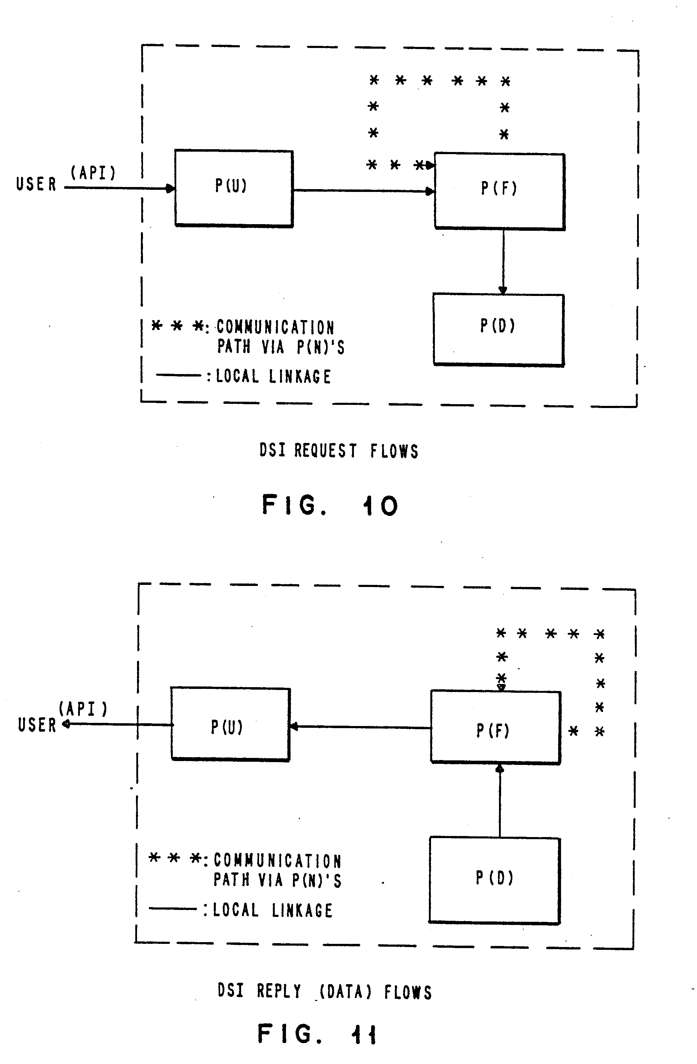

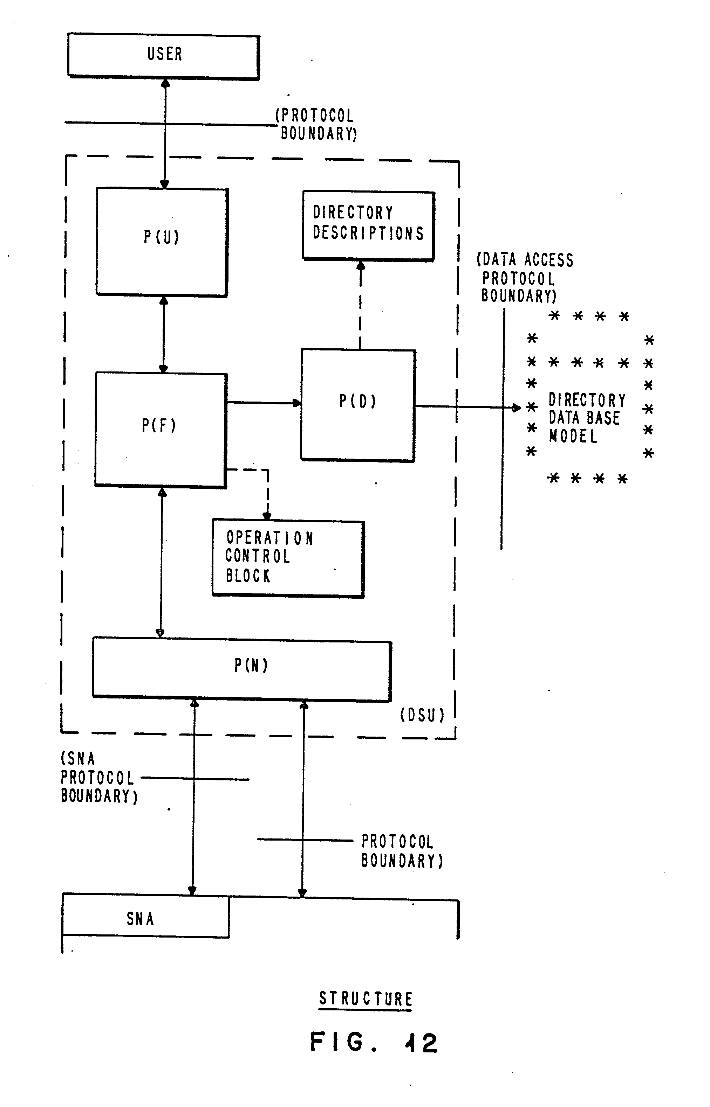

Figure 10 shows the DSI request flows among DSPs. The possible flows are : (1) P(U)-P(F), (2) P-(F)-P(F) by way of P(N)s, and (3) P(F)-P(D). Figure 11 shows the DSI reply flows among DSPs. The possible flows are : (1) P(D)-P(F), (2) P(F)-P(F), and (3) P(F)-P(U).

Usage of Protocol Boundaries

Thus, the present system defines one protocol boundary for its users and uses three different protocol boundaries to formally describe the system structure. A DSU provides the protocol boundary for the user to send the directory requests to DSU and receive the directory information/response for DSU. DSU uses the protocol boundary of a communication network to communicate with another DSU in another system. Another protocol boundary is used by DSU to control accesses to and read and write the data in a directory data model. The functions of these verbs may be implemented in a product unique manner.

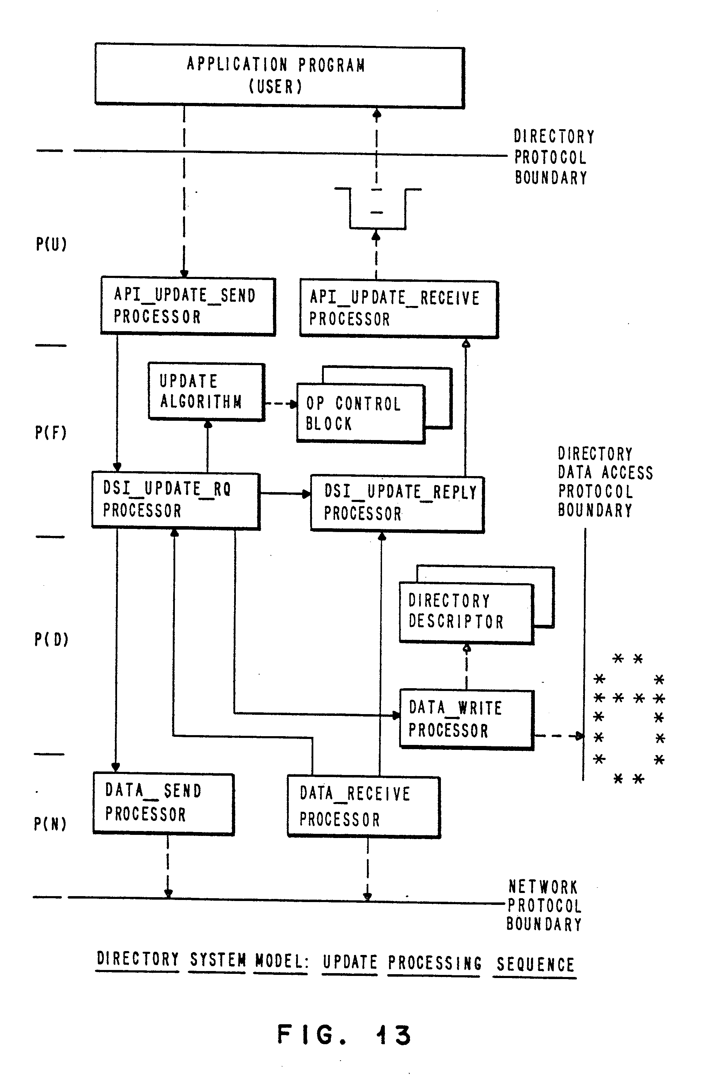

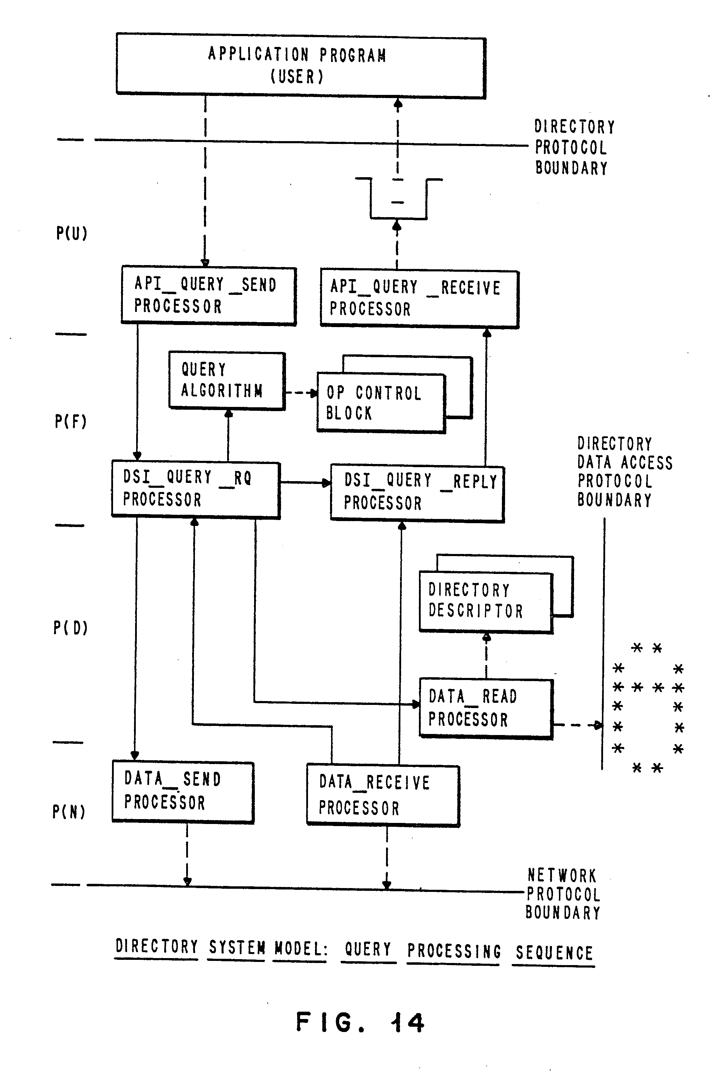

In connection with Figs. 13 and 14 illustrating the processing sequence for update and query propagation, respectively, there are separate processors shown for update reply, update request, query reply and query request. However, if a given DSU is not involved in query propagation, only the update processors are required.

In the present invention, there are two types of update mechanisms, directed and undirected.

DIRECTED UPDATE MECHANISMS. This is the most simple update mechanism. The user specifies the identity of the DSU to which the update message must be sent -the target DSU. The DSU to which the user is attached (the source DSU) would then use the transport mechanism to send a message to the target DSU. The target DSU would receive this message, perform the necessary operations on its local directory and respond as appropriate. It would not propagate the message to any further remote DSU. Figure 15 depicts an example of the use of a directed update does not imply physical adjacency of source and target DSU.

This mechanism can be used where the user knows the target DSU, and the underlying transport provides a communication path to the target DSU. This mechanism cannot be used if either of the above conditions are not satisfied. While the second condition may be satisfied in many environments, it is probably unlikely that the user will know the identity of the target DSU. Special cases where the user has this information may include.

1. The user obtains this information through some mechanism specified by the user or by means of a query function. An example of this mode of operation is if the name of the object contains the identity of the target DSU.

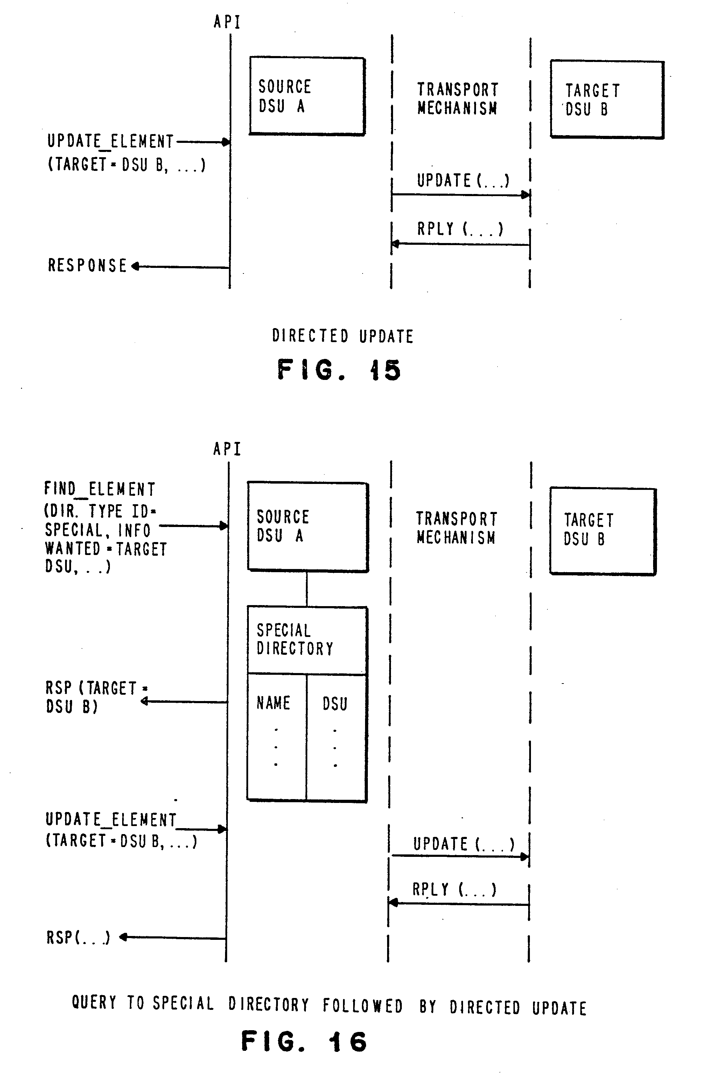

2. This mechanism allows the maintenance of a special directory which contains the identities of the target DSUs for certain objects in the network. The user would query this special directory, obtain the target DSU information, and then initiate a directed update. This special directory may be maintained through the directed update mechanisms. Figure 16 depicts an example of the user of this special directory.

If either condition described above does not hold, or it is desired that target DSUs propagate the update further, the directed mechanism cannot be employed. This provides the rationale for the next section which describes the undirected mechanism in which the mechanisms in accordance with the present invention supply the identities of the target DSUs.

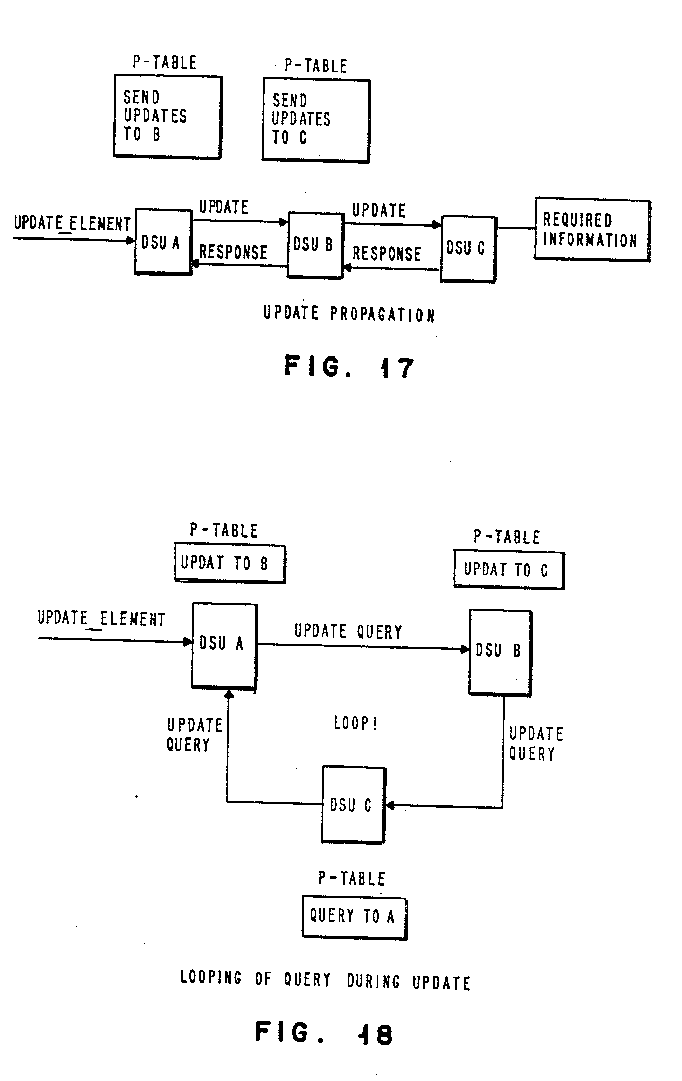

UNDIRECTED UPDATE MECHANISMS. In the undirected mechanisms, the user does not provide the identity of the target DSU. Instead, the propagation of updates is guided by data structures known as propagation tables or P-tables. Each DSU maintains, for each directory type, a P-table which determines, for that directory type, which other DSUs to send query and update messages to. Upon receipt of an undirected update, the source DSU consults its P-table for that directory type and, based on the information contained in the P-tables, sends an update message to one or more DSUs. The DSUs that receive the message consult their own P-tables and may propagate the update further. Figure 17 depicts a typical example of update propagation.

The fact that the receiving DSU may propagate the message further creates two possible causes of incorrect operation. Firstly, there is the possibility that the update query sent to one DSU, (DSU B in the example), is not propagated while the update query sent to another DSU is propagated (DSU C), resulting in the response from one DSU arriving very much before the response from the other. Incorrect operation may result if the source DSU responds to the user and erases any memory of the query immediately after the first response.

Secondly, there is the possibility that query or update messages may "loop". For example, in Figure 18, the P-tables are set up so that DSU A sends queries for update to DSU B, and DSU B sends update queries to DSU A. If no mechanism was in place to prevent looping, update queries could bounce back and forth between the two DSUs forever.

The mechanisms that will be described in the following sections solve the above problems by creating a special control block for each update and maintaining that control block until propagation has terminated.

### P-Tables

The following describes the processing of queries and updates, with or without propagation. The different cases involved in such processing include :

Query Processing at the origin DSU without propagation -the origin DSU receiving the query request from the user satisfies the request from the locally residing directory without propagation.

Query Processing at the origin DSU with propagation. The origin DSU cannot locally satisfy the request from the user and, therefore, originates the query request for propagation to other remote DSUs.

Query Processing at the intermediate DSU -The intermediate DSU receiving a query request from the remote DSU cannot satisfy the request and, therefore, propagates the query request further to other DSUs.

Query Processing at the target DSU -The target DSU receiving a query request retrieves the requested data and send the query reply toward the origin DSU.

Update Processing at the origin DSU -The origin DSU receiving an update request from the user originates the update request for the propagation to the DSUs to be affected.

Update Processing at the intermediate DSU -The intermediate DSU receiving an update request from the remote DSU propagates the update request further to other DSUs to be affected.

Each case will be described separately by considering only those components of the directory system structure that are required to process the given case. In the drawings, solid lines with arrows denote procedure CALLS. Dotted lines with arrows denote the execution of the protocol boundaries or the access of the control data block. Figure 14 illustrates the directory system model for the query processing, while Figure 13 illustrates the directory system model for update processing.

### QUERY PROCESSING CASES

Query Processing at Origin DSU (No propagation)

The processing steps include :

1. The application program calls the API__Query Send Processor to pass the QUERY verb.

2. The API__Query__Send validates its syntax and parameters. The API__Query__Send calls the DSI-Query__RQ processor to pass the Query request for processing.

3. The DSI__Query__RQ processor calls the Data__Read processor to request the data. The Data__read processor retrieves the requested directory data by managing the data access protocol boundary according to the directory descriptors, and returns the retrieved data to the DSI__Query__RQ.

4. The DSI__Query__RQ constructs the DSI query reply which carries the retrieved data, and calls the DSI__Query__Reply processor to pass the query reply.

5. The DSI__Query__Reply processor manages the finite state machines associated with the query request, and calls the API__Query__Reply processor to present the results of the query to the application program.

6. The API_Query_Reply Processor decodes the DSI query reply and places the resulting data into the queue.

Control is eventually returned to the API_Query-Send. At this time, the API_Query_Send returns control with the return code ("successful") to the application program.

Query Processing at the origin DSU (Propagation)

The processing for the case where the origin DSU cannot satisfy the query request from the local directory, thus originating the DSI query request for propagation to other remote DSUs, is as follows :

Processing steps :

1. The application program calls the API_Query_Send Processor to pass the QUERY verb.

2. The API_Query_Send validates its syntax and parameters. The API_Query_Send calls the DSI_Query_RQ processor to pass the query request for processing.

3. The DSI_Query_RQ processor calls the Data-Read processor to request the data. The Data_Read processor returns an indication that it cannot find the requested data from the local directory.

4. The DSI_Query_RQ calls the Query Algorithm which is one of the Directory algorithm facilities. The query algorithm determines which DSU to send the DSI query request to for remote search.

5. The DSI_Query RQ places the destination DSU name (which indicates the next DSU for the request to be delivered to) in the appropriate field of the DSI query request, and calls the Data_Send processor to send the DSI query request through the network.

6. The Data-Send processor manages the network protocol boundary for proper delivery of the DSI query request to the destination DSU. At this time control will be returned to the API_Query_Send through the DSI_Query_RQ, and API_Query_Send returns control with the return code ("successful") to the application program.

7. The Data_Receive processor receives the DSI query reply carrying the requested data from the remote DSU through the network protocol boundary.

8. The Data_receive processor calls the DSI_Query_Reply processor to pass the DSI query reply received from the remote DSU.

9. The DSI_Query_Reply processor manages the finite state machines associated with the query request, and calls the API_Query_Reply processor to present the results of the query to the application program. Optionally, the results of the query can be retained in the local directory by calling the Data_Write processor.

10. The API_Query_Reply Processor decodes the DSI query reply and places the results of the query into the queue. Optionally, application program is scheduled for each enqueued query result.

Query Processing at an Intermediate DSU

The processing for the case where the intermediate DSU receives a DSI query request but it cannot service the query request from the local directory, thus sending the DSI query request for propagation to other remote DSUs, is as follows:

Processing steps :

1. The Data_Receive Processor receives the DSI query request from the remote DSU through the network protocol boundary.

2. The Data_Receive processor calls the DSI_Query_RQ processor to pass the DSI query request received from the remote DSU.

3. The DSI_Query_RQ processor calls the Data_Read processor to request for the data. The Data_Read processor returns an indication that it cannot find the requested data from the local directory.

4. The DSI_Query_RQ calls the Query Algorithm to determine which is the next DSU for query propagation.

5. The DSI_Query_RQ places the destination DSU name in the appropriate field of the DSI query request, and calls the Data_Send processor to send the DSI query request through the network.

6. The Data_Send processor manages the network protocol boundary for proper delivery of the DSI query request to the destination DSU.

Query Processing at Target DSU

The processing for the case where the target DSU receives a DSI query request from a remote DSU, retrieves the requested data from the local directory and sends the DSI query reply toward the origin DSU is as follows :

Processing steps :

1. The Data_Receive processor receives the DSI query request from the remote DSU through the network protocol boundary.

2. The Data_Receive processor calls the DSI_Query_RQ processor to pass the DSI query request received from the remote DSU.

3. The DSI_Query_RQ processor calls the Data_Read processor to request for the data. The Data_Read processor retrieves the requested directory data by managing the data access protocol boundary according to the directory descriptors, and returns the retrieved data to the DSI_Query_RQ.

4. The DSI_Query_RQ constructs the DSI query reply which carries the retrieved data, and calls the Data_Send processor to send the DSI query request through the network.

5. The Data_Send processor manages the network protocol boundary for proper delivery of the DSI query request to the destination DSU.

First, the structure of these P-tables is described, followed by the algorithms that the DSUs use in propagating queries and updates through these lists. The P-tables at the various DSUs define how the DSUs interact with one another in performing updates. Each DSU in the network contains a P-table for every directory type for which it may perform undirected updates. The P-table in a DSU contains the identities of some of the other DSUs in the network. It must be possible to establish a communication path with any DSU that appears in a P-table.

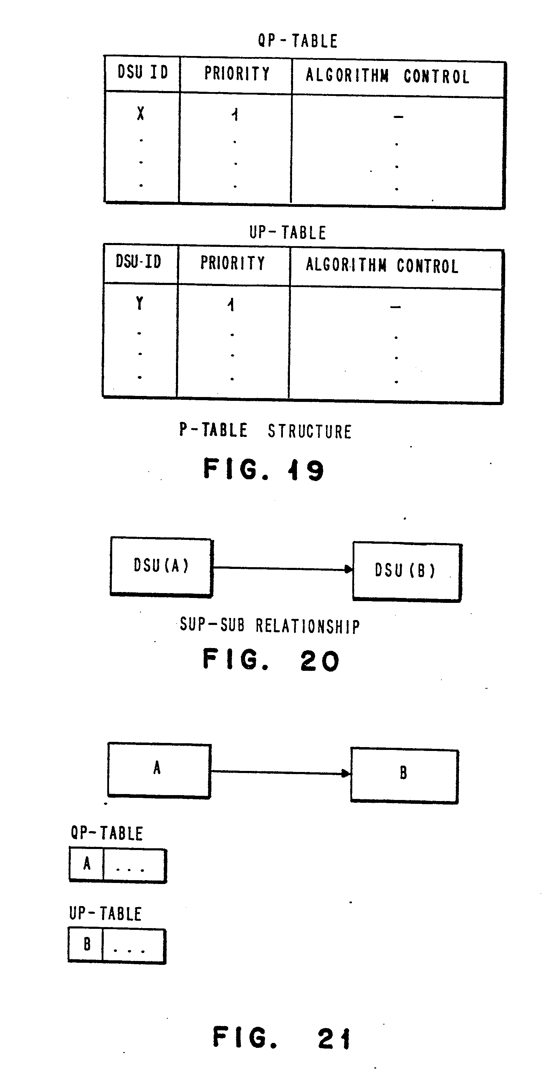

The P-table consists of two parts, a query P-table or QP-table and an update P-table or UP-table. The QP-table defines the DSUs to which queries are sent and the UP-table defines the DSUs to which updates are sent. The structure of the tables is shown in Figure 19. A more detailed description of the operation of the DSUs when working propagating queries is contained in the above identified copending application (A2)

As can be seen, in addition to containing the identities of the DSUs, these tables also define the order in which the DSUs are queried or updated, by specifying a numeric parameter or priority associated with each DSU. The DSUs with the highest priority are sent the query or update message first. DSUs with equal priority receive the messages in parallel. As Figure 19 also depicts, there is an extra algorithm control field associated with each DSU entry.

Creation of P-tables. The entries in each P-table may be created in several different ways. They may be linked directly to the way in which data is distributed through the system, something which may be specified in the form of an affinity table. Alternatively, the P-tables may be defined directly at system generation time and remain unchanged through the entire directory operation. They may also be dynamically created during operation or through other mechanisms such as updates to a "directory of directories" or through input from the network routing function.

There are two basic approaches to P-table creation.

a. The entries may be created at system generation time and may either remain unchanged through the operation of the directory system or may be updated dynamically.

b. The entries may be updated during operation directly by some function defined by the user. For example, the routing function may have the ability to change the P-tables when it receives topology updates.

Furthermore, only indirect access to the P-tables may be permitted. The indirection is in that the user does not specify the actual entries in the P-tables but, instead, specifies the way in which he wants data distributed through the network using certain data distribution primitives. These notions are then translated automatically into entries in P-tables.

The advantage of this indirect approach is that it enables the user to think of the directory structure only in terms of data distribution, something that is intuitive and easy to understand, while shielding him from the complexities of understanding the flow of updates. The disadvantage of this approach is that it limits flexibility and prevents the user from exercising the full range of update propagation options that is possible if direct access to the P-tables is permitted.

## DATA DISTRIBUTION PRIMITIVES

The user of the DSS defines some data description relationships between the DSUs in the network. Described here are the relationships, how they are used to set up a DSS, and how these relationships get translated into P-table entries. In understanding the factors affecting the translation, it is important to understand the "duality" between queries and updates. In particular, if DSU A always sends an update to DSU B whenever it changes it's directory, there is no necessity for DSU B ever to query DSUA. Conversely, if DSU B always queries DSU A, there is no necessity for DSU A ever to send updates to DSU B. The translation from data distribution to P-table entries is designed to take this duality into account and thus to conserve on the use of communication bandwidth.

The relationships are with respect to a specific directory type ID. It is possible and indeed likely that the relationships for different directory type ID's will be quite different. The following data distribution relationships can be defined :

Sup-Sub Relationship

This relationship is depicted pictorially as shown in Figure 20 by a directed arc from A to B. A is the Subordinate (SUB) and B is the Superior - (SUP). The relationship is set-up by specifying at A that B is a SUP of A and by specifying at B that A is a SUB of B. This relationship implies that under "normal" conditions a communication path exists from the SUB to the SUP through the transport mechanism. In terms of data distribution, it implies that, if X is the directory type ID from which this relationship has been defined, then B's directory of type ID X is a superset of A's directory of the same type ID.

The translation into P-table entries attempts to preserve the nature of the relationship. As B is the SUP of A, updates are propagated from A to B. However, as B's directory contains all the information that A's directory contains, B neither queries nor updates A. The translation to P-table entries in A and B is depicted in Figure 21.

Peer-Peer Relationship

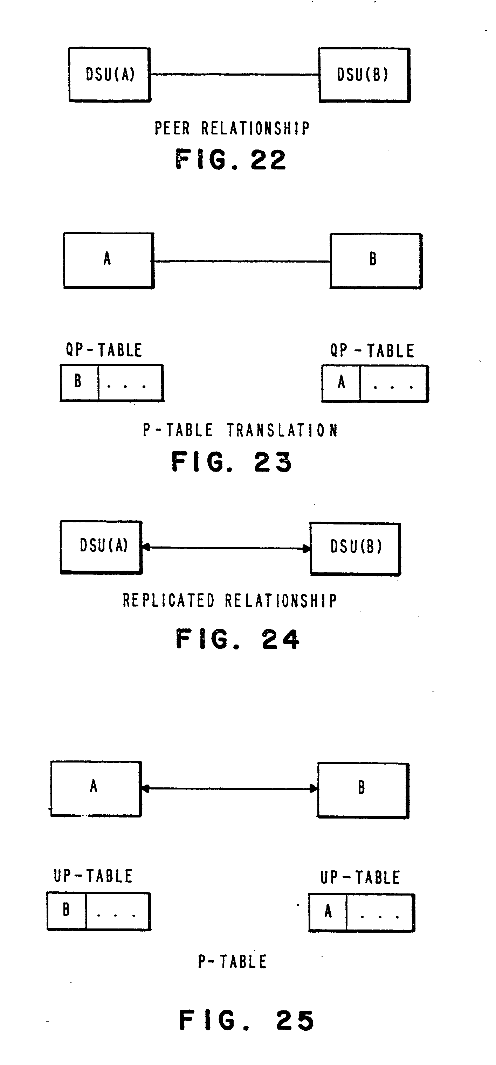

This relationship is depicted pictorially in Figure 22 by an undirected arc between the PEERs. The relationship is set-up by specifying at A that B is a PEER OF A and by specifying at B that A is a PEER of B. This relationship implies that the PEERs can communicate with each other through the transport mechanism and that the user would like them to communicate directly in order to perform directory functions. It does not imply any relationship in terms of data distribution. It does not imply any relationship in terms of data distribution. Thus, in the translation to P-table entries, queries are exchanged between PEERs, but updates are not. Figure 23 shows the translation.

Replicated Relationship

This relationship is depicted pictorially in Figure 24 by a bidirected arc between the DSUs. The relationship is set up by specifying at A that B is a REPLICATE of A and by specifying at B that A is a REPLICATE of B. This relationship implies that the DSUs can communicate with each other through the transport mechanism. In terms of data distribution, it is equivalent to two SUP-SUB relationships, that is, B is a superset of A and A is a superset of B. This can only be satisfied if A and B are identical. The translation to P-table entries is designed to preserve the replication by propagating updates between the DSUs. Figure 25 depicts the translation.

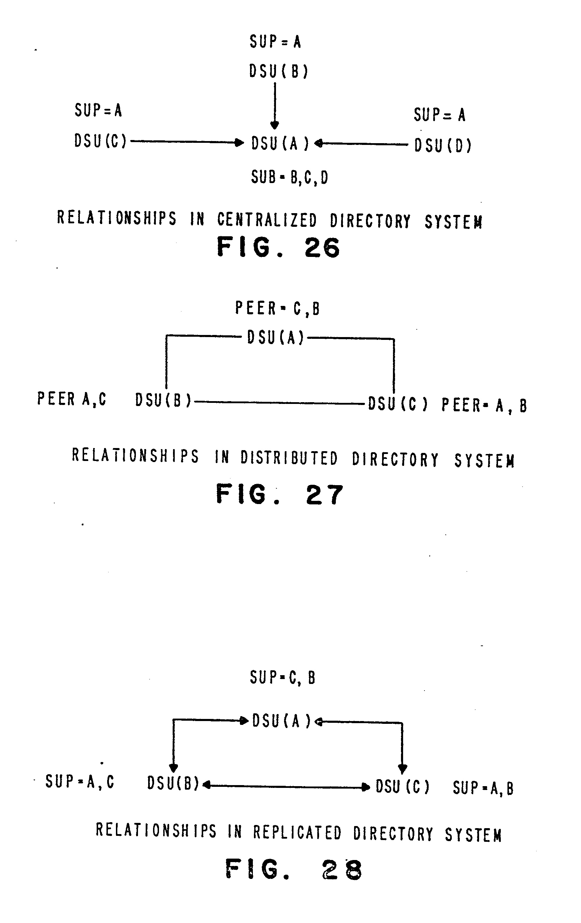

Clearly, many other types of relationships are possible. The relationships between the DSUs in a network determines the data distribution. Some examples are shown in Figures 26-29. It will be seen that the relationships define a network over which updates are normally propagated. This network is usually a sub-network of the network formed by defining all possible communication paths. In other words, there may be communication paths available between DSUs which are not normally used in update propagation.

PRIORITIES OF THE ENTRIES

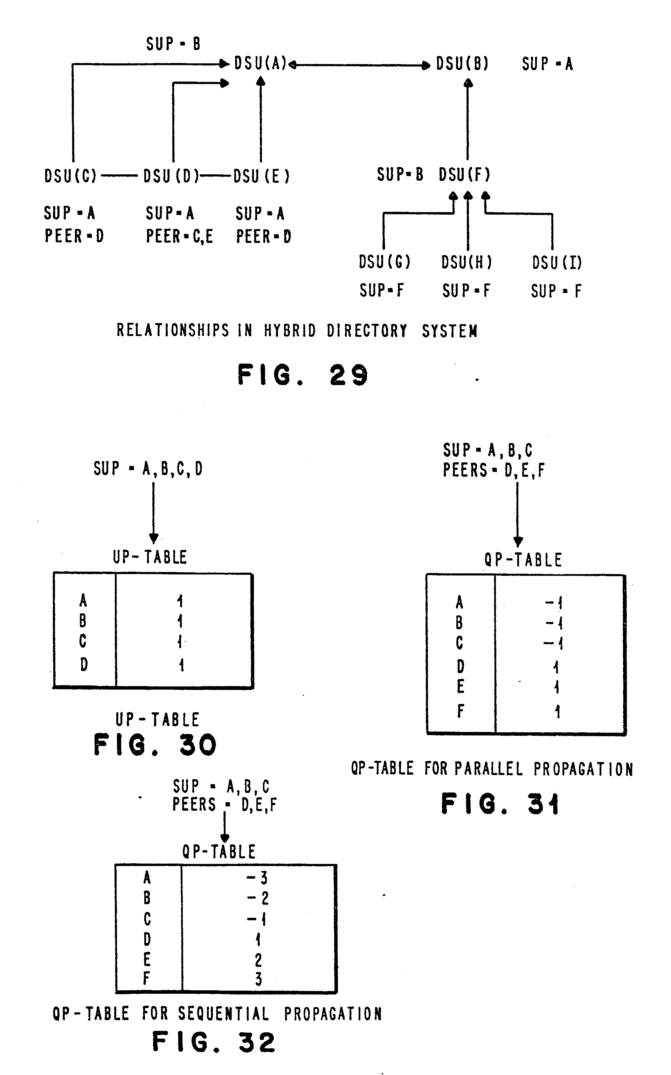

It has been demonstrated how the data distribution primitives defined get mapped into entries in the QP-table and the UP-table. The priority of these entries is established as follows. Considering the UP-table shown in Figure 30, it seems advantageous to propagate queries in parallel to all of the SUP DSUs, as this would enable the update to reach the appropriate destinations as soon as possible. Thus, in the translation to P-table entries, all entries are given equal weight.

In the example shown in Figure 31, both SUP's and PEERs are represented. Parallel propagation is not always desirable. In some instances sequential propagation may be preferable, as it may result in less bandwidth being used in propagation. Thus two basic methods, the parallel and the sequential, are provided for constructing P-tables. The choice of parallel or sequential can be controlled at the time of system definition.

The parallel approach is very similar to that used in the construction of the UP-tables. All SUP entries are given equal priority and all PEER entries are given equal priority. The priority of the SUPs, however, is higher than the priority of the PEERs (that is, a smaller numerical value). For reasons that will become apparent when the algorithms are described, the SUPs are assigned a negative number as priority. Figure 31 shows such an example.

The sequential propagation approach assigns priority numbers to the DSUs in ascending order, with the SUPs having the smaller numbers, (again chosen to be negative), and the PEERs the larger numbers (positive). Figure 32 depicts this through an example. The determination of whether parallel or sequential propagation is used is usually made at create-configuration time. It is important that all the DSUs that participate in a given update use the same mode of propagation. Thus, it is not permitted for the originating node to propagate an update in a sequential fashion and for intermediary nodes to relay that update in parallel fashion.

In order to ensure this, the update messages that are propagated in the network contain a bit which indicates whether the DSU that initiated the update used sequential or parallel propagation. Intermediary nodes use the method of propagation indicated in the query message, thereby ignoring the priorities in the UP-table and creating a new set of priorities if the update query message specifies at different mode of propagation than the mode for which their UP-tables are set up.

## RELATIONSHIP RULES

The relationships of the DSUs in the network for a given directory type ID should satisfy certain rules. These rules are important in order to maintain internal consistency of the P-table in a given DSU, as well as in the relationship between P-tables in different DSUs. The rules are as follows:

If full accessibility is to be preserved, then for any two DSUs A and B, one of the following must hold.

1. There is a path consisting entirely of undirected arcs between A and B.

2. There exists a DSU C such that there are paths consisting entirely of directed arcs, traversed in the indicated direction, from both A and B to C. Note that a degenerate case where this condition would be satisfied would be if there was a directed path from A to B or vice versa. In order for the propagation algorithms not to use an unnecessarily large amount of bandwidth, only one of 1 and 2 above must hold.

If B is PEER(A), then B cannot be SUP(A) or REPLICATE(A). Similarly, if B is SUP(A) then B cannot be PEER(A) or REPLICATE(A). PEER relationships are always reciprocal. Similarly, if B is SUP(A) then B cannot be PEER(A) or REPLICATE-(A) and if B = REPLICATE(A) then it cannot be PEER(B) or SUP(A).

## BASIC UPDATE MECHANISM

This is shown in block diagram form in Fig. 13. The update message sent between the DSUs contain all the information that initiated the update. In addition, it contains the source DSU ID and a correlation number chosen by the source. An update message is shown below in Table I. Update messages solicit update-acknowledgements. These acknowledgements are simply a means of indicating to the various DSUs that the update has propagated and that the control block can be brought down. The update messages are propagated to many DSUs in parallel, and there may be several update and update-acknowledgement messages in the network at any one time.

## TABLE I

VARIABLE NAMES USED:

| | | |
|---|---|---|
| corr | = | Correlation of number of update |
| org | = | Origin of update/ack-API or DSU from which update/ack was received |
| source | = | DSU that initially received the update from API |
| IN(x) | = | Value in IN field corresponding to DSU x |
| OUT(x) | = | Value in OUT field corresponding to DSU x |
| pointer | = | Value stored in control block to indicate origin of first copy of the update. |

```
    dests     =      List of DSUs to which update/ack is to
                     be sent

CODE EXECUTED BY DSU A

Receive update from API;
    choose value from corr;
    source = A; org = API;
    call receive_update (source, corr, org);
    end;
Receive_update (source, corr, org);
    If control block for source.corr exists, then do;
        IN(org) = done;
        dest = org;
        if OUT(org) = done then do;
            call send_ack (dest);
            OUT (org) = done;
            end;
        end;
    Else do;
        apply update to local directory;
        pointer = org;
        create control block from UP-table;
        if control block has entries, then call send_
update;
        else call send_ack;
        end;
Receive_ack (type, org);
    IN(org) = done;
    call check_termination;
    end;
check_termination;
    If IN(x) = done for all entries in control block, then
do;
        call send_ack;
        end;
    end;
```

```
send_update;
    dests=all entries in control block;
    set OUT(x) = done for all x in dests;
    transmit update to all x in dests;
    end;
Send_ack (est)
    transmit ack to dest;
    delete control block;
    end;
```

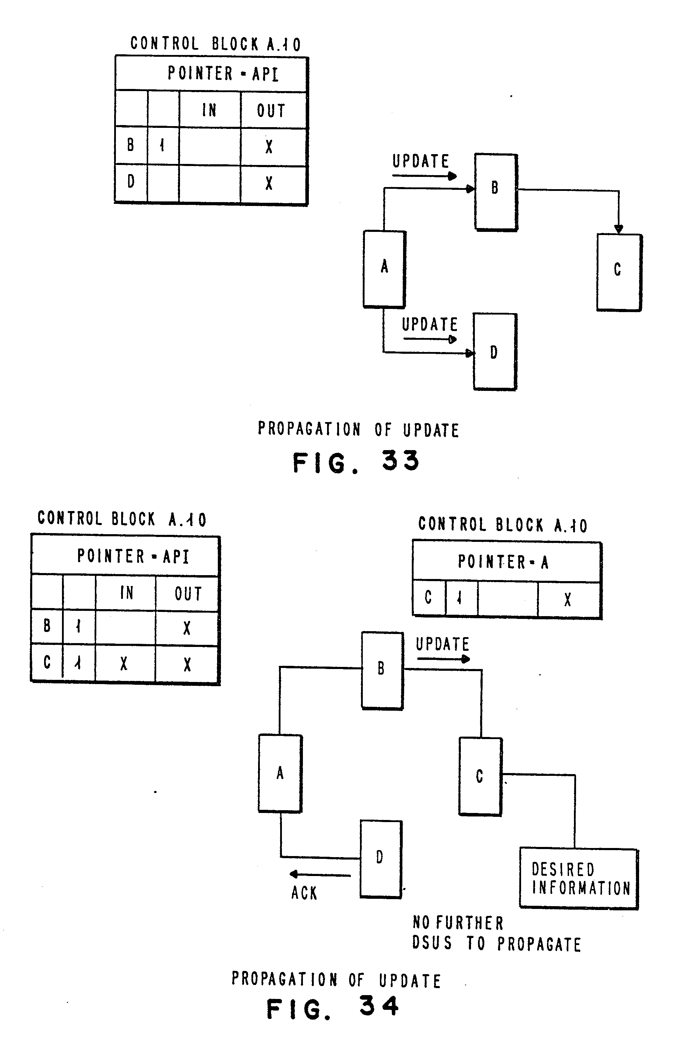

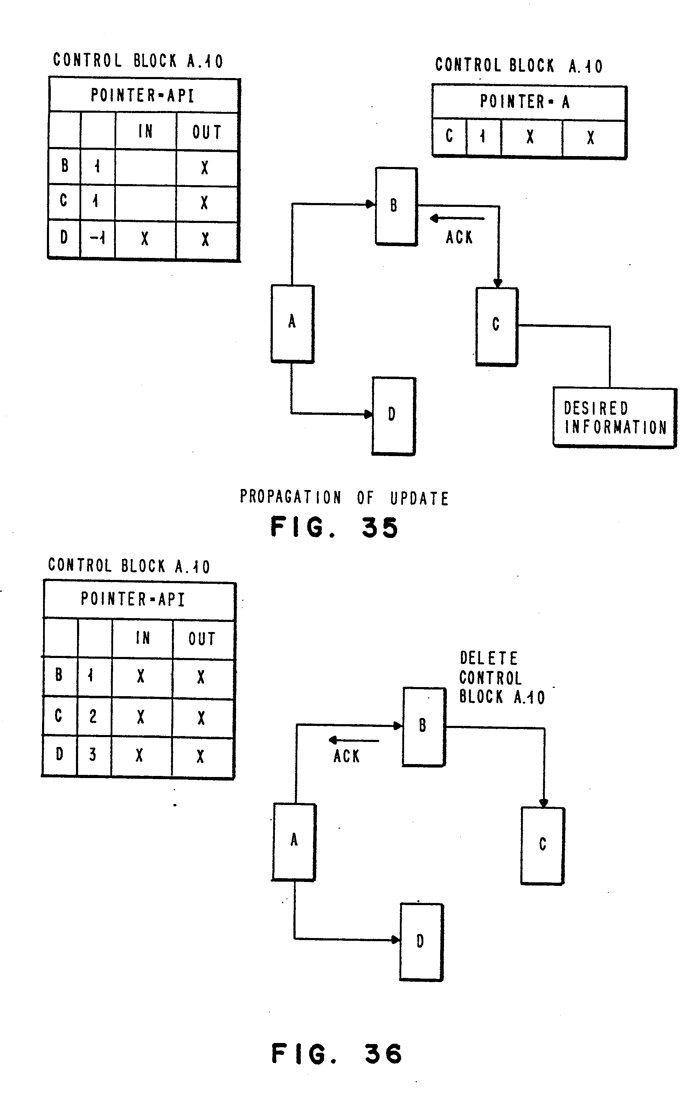

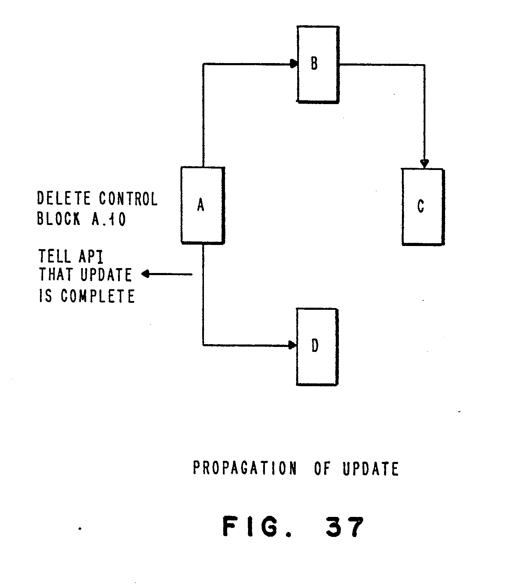

The working of the update algorithm can be demonstrated by following a typical example, as shown in Fig. 33 through Fig. 37.

ELEMENT LEVEL UPDATES

In order to maintain a high degree of consistency of information in the directory services system, it is sometimes desirable to send updates to SUBs or PEERs. This is particularly true in environments where query results are retained. it is, however, not desirable to send updates to all the SUBs and PEERs as this results in unnecessarily large use of bandwidth. Furthermore, the SUBs or PEERs that need to receive updates differs from element to element. For example, DSU(B) which is a SUB of A may be interested in updates on TOM, while DSU(C), also a SUB of A, may not care about TOM, but may wish to receive any updates on JACK.

In order to ensure this high level of consistency, the mechanisms provide the option of maintaining special element level pointers which indicate, for each element, a list of DSUs that must be informed of updates on that element. This list is an addition to the list contained in the UP-table. In propagating an update, the element level list would be added to the UP-table and the combined list would be used to create the control block for update propagation.

The control tables and the algorithms described above allow dynamic updates of directory elements without requiring the user to specify targets and still maintain the working criteria.

Claims

1. In a directory database system including a network having a plurality of communication paths and a plurality of directory service units (DSU), each of said DSUs providing one or more directory service functions within said directory database, an apparatus for propagating update information relative to an object stored in said database from a source DSU to a target DSU comprising :

a special directory containing the identities of target DSU's for certain objects in said network;

means for communicating said update information from said source DSU to said special directory means for generating information identifying the target DSU for said object embodied in said update; and

means for communicating said update information to said identified target DSU from said source DSU.

2. In a directory database system including a network having a plurality of communication paths and a plurality of directory service units (DSU), each of said DSUs providing one or more directory service functions within said directory database, apparatus for propagating undirected update information relative to an object stored in said database from a source DSU to one or more target DSUs, which target DSU may contain information relative to said object, comprising :

a propagation (P) table in each of said DSUs, each of said P tables being a data structure capable of determining which other DSU's to send said update information to,

means in said source DSU for examining its associated P table for the directory type specified in said update information to generate an identification of one or more additional target ones of said DSUs to which said update information should be directed,

means for propagating update inquiries from said source DSU to those additional DSU's identified by said P table in said source DSU, and

means for communicating said update information from said source DSU to the one of said additional target DSUs containing said information to be updated.

3. Apparatus in accordance with Claim 2, including means in each of said additional DSU's for examining its P table to determine the identity of the target DSU to which said update inquiry should be directed.

4. Apparatus in accordance with Claim 1 in which each of said P tables includes a query P-table (QP-table) and an update P-table (UP-table).

5. Apparatus in accordance with Claim 4 in which said UP table defines the one or more target DSUs to which update inquiry should be sent.

6. Apparatus in accordance with Claim 5 in which each of said UP tables contain information determining the order in which any additional target DSUs are to be queried.

7. Apparatus in accordance with Claim 4 in which each of said UP tables in each particular one of said DSUs defines the status relationship of said particular DSU to other DSUs of the same directory type.

8. Apparatus in accordance with Claim 7 in which the UP table is said particular DSU defines a superior-subordinate relationship between said particular DSU and one or more of said other DSUs.

9. Apparatus in accordance with Claim 7 in which the UP table in said particular DSU defines a peer-peer relationship between said particular DSU and one or more of said other DSUs.

10. Apparatus in accordance with Claim 7 in which the UP table in said particular DSU defines a replicated relationship between said particular DSU and one or more of said other DSU's.

11. Apparatus in accordance with Claim 5 in which each of said UP tables determines whether further propagation of an inquiry to a plurality of other DSU's is to be in a serial or a parallel mode.

12. Apparatus in accordance with Claim 5 including means for indicating in each said DSU which of the other of said DSUs are to be informed of updates performed on objects under the control of said DSU.

APPLICATION PROGRAM

SYSTEM COMPONENT

API VERBS

API RETURN CODES & DATA

PROTOCOL BOUNDARY

DIRECTORY SERVICE SYSTEM (DSS)

PROCESSES USING THE DIRECTORY SERVICE SYSTEM

FIG. 1

P(F)

DSI RQ & REPLY

DSI RQ & REPLY

SEND

RECEIVE

P(N)

NETWORK PROTOCOL BOUNDARY

TRANSPORT MECHANISM

STRUCTURE OF NETWORK SERVICE PROCESS, P(N)

FIG. 8

USER

(DSS)

DIRECTORY
SERVICE
UNIT (DSU)

DSUS COMMUNICATE WITH EACH OTHER
USING A COMMUNICATION NETWORK

DSI COMMANDS ARE EXCHANGED
BETWEEN DSUS

DIRECTORY
SERVICE
UNIT (DSU)

DIRECTORY
SERVICE
UNIT (DSU)

USER

DIRECTORY
SERVICE
UNIT (DSU)

USER

INTERCONNECTED DSUS IN A DSS

F I G .   2

USER

DSU A

U F N

DSU C

F D

N U

DSU B

D F N

USER

DSU D

U F N

(DSS)

USER

FUNCTIONS DISTRIBUTED IN A DSS

FIG. 3

TWO-LEVEL HYBRID DIRECTORY SYSTEM

FIG. 4

USER

API
VERBS &
PARMS

API RETURN
CODES &
DATA

PROTOCOL
BOUNDARY

n

2

1

API VERB
PROCESSORS

P(U)

DSI
RQ

DSI
REPLY

P(F)

STRUCTURE OF END USER SERVICE, P(U)

FIG. 5

P(F)

DSI
RQ

DSI
REPLY

WRITE

READ

n

2

1

DIRECTORY
DESCRIP-
TOR

P(D)

*****
*       *
*******
*       *
*       *
*       *
*****

DIRECTORY
DATA ACCESS
PROTOCOL
BOUNDARY

STRUCTURE OF DIRECTORY DATA SERVICES P(D)

FIG. 7

STRUCTURE OF DIRECTORY FUNCTION SERVICE, P(F)

FIG. 6

DIRECTORY SERVICE PROCESSES DISTRIBUTED IN A DSS

FIG. 9

DSI REQUEST FLOWS

FIG. 10

DSI REPLY (DATA) FLOWS

FIG. 11

USER

(PROTOCOL
BOUNDARY)

P(U)

DIRECTORY
DESCRIPTIONS

(DATA ACCESS
PROTOCOL
BOUNDARY)

P(F)

P(D)

DIRECTORY
DATA BASE
MODEL

OPERATION
CONTROL
BLOCK

P(N)

(DSU)

(SNA
PROTOCOL
BOUNDARY)

PROTOCOL
BOUNDARY)

SNA

STRUCTURE

FIG. 12

DIRECTORY SYSTEM MODEL: UPDATE PROCESSING SEQUENCE

FIG. 13

APPLICATION PROGRAM
(USER)

DIRECTORY
PROTOCOL
BOUNDARY

P(U)

API_QUERY_SEND
PROCESSOR

API_QUERY_RECEIVE
PROCESSOR

QUERY
ALGORITHM

OP CONTROL
BLOCK

P(F)

DIRECTORY
DATA ACCESS
PROTOCOL
BOUNDARY

DSI_QUERY_RQ
PROCESSOR

DSI_QUERY_REPLY
PROCESSOR

DIRECTORY
DESCRIPTOR

P(D)

DATA_READ
PROCESSOR

DATA_SEND
PROCESSOR

DATA_RECEIVE
PROCESSOR

P(N)

NETWORK
PROTOCOL
BOUNDARY

DIRECTORY SYSTEM MODEL: QUERY PROCESSING SEQUENCE

FIG. 14

API

| SOURCE DSU A | | TRANSPORT MECHANISM | | TARGET DSU B |

UPDATE_ELEMENT
(TARGET = DSU B, ...)

UPDATE (...)

RPLY (...)

RESPONSE

DIRECTED UPDATE

# FIG. 15

API

FIND_ELEMENT
(DIR. TYPE ID=
SPECIAL, INFO
WANTED = TARGET
DSU, ...)

| SOURCE DSU A | | TRANSPORT MECHANISM | | TARGET DSU B |

SPECIAL
DIRECTORY

RSP (TARGET =
DSU B)

| NAME | DSU |
| . | . |
| . | . |
| . | . |

UPDATE_ELEMENT
(TARGET = DSU B, ...)

UPDATE (...)

RPLY (...)

RSP(...)

QUERY TO SPECIAL DIRECTORY FOLLOWED BY DIRECTED UPDATE

# FIG. 16

P-TABLE

SEND
UPDATES
TO B

P-TABLE

SEND
UPDATES
TO C

UPDATE_ELEMENT → | DSU A |  UPDATE →  | DSU B |  UPDATE →  | DSU C | —— | REQUIRED INFORMATION |

| DSU A | ← RESPONSE | DSU B | ← RESPONSE | DSU C |

UPDATE PROPAGATION

# FIG. 17

P-TABLE

UPDAT TO B

P-TABLE

UPDAT TO C

UPDATE_ELEMENT → | DSU A |   UPDATE QUERY →   | DSU B |

UPDATE
QUERY

LOOP!

UPDATE
QUERY

| DSU C |

P-TABLE

QUERY TO A

LOOPING OF QUERY DURING UPDATE

# FIG. 18

QP-TABLE

| DSU ID | PRIORITY | ALGORITHM CONTROL |
|--------|----------|-------------------|
| X      | 1        | —                 |
| .      | .        | .                 |
| .      | .        | .                 |
| .      | .        | .                 |

UP-TABLE

| DSU-ID | PRIORITY | ALGORITHM CONTROL |
|--------|----------|-------------------|
| Y      | 1        | —                 |
| .      | .        | .                 |
| .      | .        | .                 |
| .      | .        | .                 |

P-TABLE STRUCTURE

## FIG. 19

DSU(A) ——→ DSU(B)

SUP—SUB RELATIONSHIP

## FIG. 20

A ——→ B

QP-TABLE

| A | ... |
|---|-----|

UP-TABLE

| B | ... |
|---|-----|

## FIG. 21

PEER RELATIONSHIP

# FIG. 22

P-TABLE TRANSLATION

# FIG. 23

REPLICATED RELATIONSHIP

# FIG. 24

P-TABLE

# FIG. 25

SUP = A

DSU(B)

SUP = A

DSU(C) ———→ DSU(A) ←——— DSU(D)

SUP = A

SUB = B,C,D

RELATIONSHIPS IN CENTRALIZED DIRECTORY SYSTEM

## FIG. 26

PEER = C,B

——— DSU(A) ———

PEER A,C   DSU(B)——————————DSU(C) PEER = A,B

RELATIONSHIPS IN DISTRIBUTED DIRECTORY SYSTEM

## FIG. 27

SUP = C, B

→DSU(A)←

SUP = A,C   DSU(B)←——————————→DSU(C)   SUP = A,B

RELATIONSHIPS IN REPLICATED DIRECTORY SYSTEM

## FIG. 28

SUP - B

DSU(A) ←——→ DSU(B)    SUP - A

DSU(C) —— DSU(D) —— DSU(E)    SUP-B DSU(F)

SUP - A     SUP-A       SUP - A
PEER-D      PEER-C,E    PEER-D

DSU(G)    DSU(H)    DSU(I)

SUP-F     SUP - F    SUP - F

RELATIONSHIPS IN HYBRID DIRECTORY SYSTEM

# FIG. 29

SUP - A,B,C,D

↓

UP-TABLE

| | |
|---|---|
| A | 1 |
| B | 1 |
| C | 1 |
| D | 1 |

UP-TABLE

# FIG. 30

SUP - A,B,C
PEERS - D,E,F

↓

QP-TABLE

| | |
|---|---|
| A | -1 |
| B | -1 |
| C | -1 |
| D | 1 |
| E | 1 |
| F | 1 |

QP-TABLE FOR PARALLEL PROPAGATION

# FIG. 31

SUP - A,B,C
PEERS - D,E,F

↓

QP-TABLE

| | |
|---|---|
| A | -3 |
| B | -2 |
| C | -1 |
| D | 1 |
| E | 2 |
| F | 3 |

QP-TABLE FOR SEQUENTIAL PROPAGATION

# FIG. 32

CONTROL BLOCK A.10

| | | | |
|---|---|---|---|
| POINTER - API | | | |
| | | IN | OUT |
| B | 1 | | X |
| D | | | X |

PROPAGATION OF UPDATE

## FIG. 33

CONTROL BLOCK A.10

| | | | |
|---|---|---|---|
| POINTER - API | | | |
| | | IN | OUT |
| B | 1 | | X |
| C | 1 | X | X |

CONTROL BLOCK A.10

| | | | |
|---|---|---|---|
| POINTER - A | | | |
| C | 1 | | X |

NO FURTHER
DSUS TO PROPAGATE

PROPAGATION OF UPDATE

## FIG. 34

CONTROL BLOCK A.10

| POINTER-API | | | |
|---|---|---|---|
| | | IN | OUT |
| B | 1 | | X |
| C | 1 | | X |
| D | -1 | X | X |

CONTROL BLOCK A.10

| POINTER - A | | | |
|---|---|---|---|
| C | 1 | X | X |

B

ACK

A

C

D

DESIRED INFORMATION

PROPAGATION OF UPDATE

# FIG. 35

CONTROL BLOCK A.10

| POINTER-API | | | |
|---|---|---|---|
| | | IN | OUT |
| B | 1 | X | X |
| C | 2 | X | X |
| D | 3 | X | X |

DELETE CONTROL BLOCK A.10

B

ACK

A

C

D

# FIG. 36

DELETE CONTROL
BLOCK A.10

TELL API
THAT UPDATE
IS COMPLETE

PROPAGATION OF UPDATE

FIG. 37